# EUROPÄISCHE PATENTANMELDUNG

(11) **EP 0 770 817 A1**
(43) Veröffentlichungstag der Anmeldung: **02.05.1997**
(21) Anmeldenummer: 96114518.2
(22) Anmeldetag: 11.09.1996
(51) Int. Cl.: F21M 3/10, F21M 7/00, F21V 25/00

(54) **Scheinwerfer für Fahrzeuge**

(30) Priorität: 25.10.1995 DE 19539570
(71) Anmelder: ROBERT BOSCH GMBH, 70442 Stuttgart (DE)
(72) Erfinder: Frey, Martin, 72805 Lichtenstein (DE); Fabry, Thomas, 72654 Neckartenzlingen (DE)

(57) **Zusammenfassung**

Der Scheinwerfer weist ein Gehäuse (10) auf, in dem ein Reflektor (20) angeordnet ist, in den eine Gasentladungslampe (24) eingesetzt ist. Für den Betrieb der Gasentladungslampe (24) ist eine elektrische Versorgungseinrichtung vorgesehen, die eine Zündeinrichtung (40) und eine Steuereinrichtung (42) aufweist. Das Scheinwerfergehäuse (10) weist eine Öffnung (56) auf, die mit einem metallischen Kühlkörper (58) verschlossen ist und die Steuereinrichtung (42) ist innerhalb des Scheinwerfergehäuses (10) am Kühlkörper (58) angeordnet. Für die Steuereinrichtung (42) ist dadurch kein gesondertes Gehäuse erforderlich und die beim Betrieb der Gasentladungslampe (24) in der Steuereinrichtung (42) entstehende Wärme wird durch den Kühlkörper (58) zur Außenseite des Scheinwerfergehäuses (10) geführt.

## Beschreibung

### Stand der Technik

Die Erfindung geht aus von einem Scheinwerfer für Fahrzeuge nach der Gattung des Anspruchs 1.

Ein solcher Scheinwerfer ist durch die DE 43 15 394 A1 bekannt. Dieser Scheinwerfer weist eine Gasentladungslampe als Lichtquelle auf und ein Scheinwerfergehäuse. Außerdem ist eine elektrische Versorgungseinrichtung für die Gasentladungslampe vorgesehen, die am Scheinwerfergehäuse angeordnet ist. Die elektrische Versorgungseinrichtung weist eine Zündeinrichtung und eine Steuereinrichtung auf. Die Steuereinrichtung ist im wesentlichen außerhalb des Scheinwerfergehäuses angeordnet und weist ein Gehäuse auf, das durch eine Öffnung im Scheinwerfergehäuse in dieses hineinragt. Die Zündeinrichtung ist innerhalb des Scheinwerfergehäuses angeordnet und über Leitungen mit der Steuereinrichtung sowie der Gasentladunngslampe verbunden. Die Steuereinrichtung erwärmt sich während des Betriebs der Gasentladungslampe, wobei durch deren Anordnung außerhalb des Scheinwerfergehäuses eine Kühlung ermöglicht ist.

Nachteilig ist dabei jedoch, daß die Steuereinrichtung ein separates, geschlossenes und abgedichtetes Gehäuse erfordert, was den Bauraum und das Gewicht des Scheinwerfers vergrößert.

### Vorteile der Erfindung

Der erfindungsgemäße Scheinwerfer mit den Merkmalen des Anspruchs 1 hat demgegenüber den Vorteil, daß für die Steuereinrichtung kein separates Gehäuse erforderlich ist und trotz deren Anordnung innerhalb des Scheinwerfergehäuses eine ausreichende Kühlung sichergestellt ist.

In den abhängigen Ansprüchen sind vorteilhafte Ausgestaltungen und Weiterbildungen des erfindungsgemäßen Scheinwerfers angegeben.

### Zeichnung

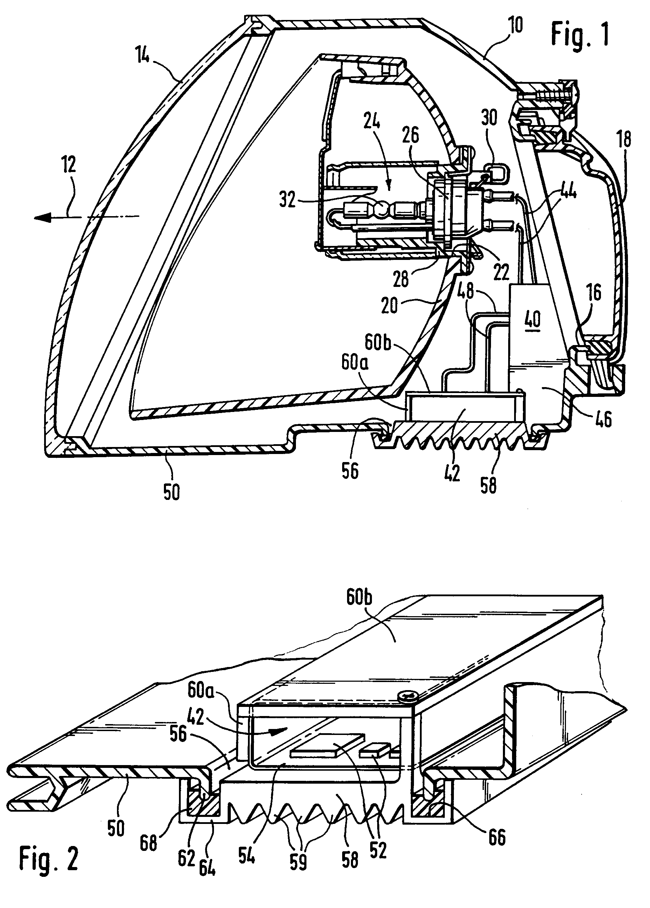

Ein Ausführungsbeispiel der Erfindung ist in der Zeichnung dargestellt und in der nachfolgenden Beschreibung näher erläuert. Es zeigen Figur 1 einen Scheinwerfer in einem vertikalen Längsschnitt und Figur 2 einen Ausschnitt des Scheinwerfers in vergrößerter räumlicher Darstellung.

### Beschreibung des Ausführungsbeispiels

Ein in den Figuren 1 und 2 dargestellter Scheinwerfer für Fahrzeuge, insbesondere Kraftfahrzeuge, weist ein Gehäuse 10 auf, das vorzugsweise aus Kunststoff besteht. Das Scheinwerfergehäuse 10 weist an seinem vorderen, das heißt in Lichtaustrittsrichtung 12 weisenden Ende eine Lichtaustrittsöffnung auf, welche mit einer lichtdurchlässigen Abdeckscheibe 14 aus Kunststoff oder Glas verschlossen ist. An seiner Rückseite weist das Scheinwerfergehäuse 10 eine Öffnung 16 auf, welche mittels einer Kappe 18 verschließbar ist und durch die eine nachfolgend noch beschriebene Lichtquelle zugänglich ist.

Im Scheinwerfergehäuse 10 ist ein Reflektor 20 verstellbar angeordnet, der eine für den Verwendungszweck des Scheinwerfers geeignete Form aufweist und aus Kunststoff oder Metall bestehen kann. Der Reflektor 20 ist mittels nicht dargestellter Verstellelemente um eine horizontale Achse und/oder eine vertikale Achse schwenkbar, um eine Einstellung der Richtung des vom Scheinwerfer ausgesandten Lichtbündels in vertikaler und/oder horizontaler Richtung zu ermöglichen. Der Scheinwerfer kann auch als sogenannter Projektionsprinzip-Scheinwerfer ausgebildet sein und in Lichtaustrittsrichtung 12 nach dem Reflektor 20 eine Blende zur Erzeugung einer Helldunkelgrenze und nach der Blende eine Linse aufweisen. In den Reflektor 20 ist in eine Öffnung 22 in dessen Scheitelbereich eine Lichtquelle 24 in Form einer Gasentladungslampe eingesetzt. Die Gasentladungslampe 24 weist einen Sockel 26 auf, der in einem am Reflektor 20 befestigten Lampenträger 28 aufgenommen und mittels eines Befestigungselements 30 gehalten ist. Die Gasentladungslampe 24 weist außerdem einen durch die Öffnung 22 des Reflektors 20 ragenden Glaskolben 32 mit einem Entladungsgefäß auf, in dem sich beim Betrieb der Gasentladungslampe 24 ein Lichtbogen ausbildet.

Um einen Betrieb der Gasentladungslampe 24 zu ermöglichen weist der Scheinwerfer außerdem eine elektrische Versorgungseinrichtung auf, die mit dem Bordnetz des Kraftfahrzeugs verbunden ist. Die Versorgungseinrichtung weist eine Zündeinrichtung 40 und eine Steuereinrichtung 42 auf. Die Zündeinrichtung 40 ist über flexible Leitungen 44 mit der Gasentladungslampe 24 verbunden und dient dazu, die Gasentladungslampe 24 zu ihrer Inbetriebsetzung zu zünden, wozu durch die Zündeinrichtung 40 Hochspannung erzeugt wird. Die Zündeinrichtung 40 ist von einem Gehäuse 46 umgeben und innerhalb des Scheinwerfergehäuses 10 angeordnet, beispielsweise an dessen Rückwand, kann jedoch auch direkt auf die Gasentladungslampe 24 aufgesetzt sein. Die Steuereinrichtung 42 ist mit der Zündeinrichtung 40 über flexible Leitungen 48 verbunden und dient dazu, einen stabilen Betrieb der Gasentladungslampe 24 nach deren Zündung sicherzustellen. Die Zündeinrichtung 40 und die Steuereinrichtung 42 können auch zu einer Einheit zusammengefaßt sein. Die Steuereinrichtung 42 ist innerhalb des Scheinwerfersgehäuses 10 nahe einer unteren Wandung 50 von diesem angeordnet und weist elektrische Bauelemente 52 auf. Die Bauelemente 52 können auf einer flexiblen Leiterfolie 54 angeordnet sein, auf der deren elektrische Verbindungen untereinander ausgebildet sind.

Vom Scheinwerfergehäuse 10 weist beispielsweise die untere Wandung 50 im Bereich der Steuereinrichtung 42 eine Öffnung 56 auf, die mit einem metallischen Kühlkörper 58 verschließbar ist. Die Öffnung 56 kann an einer beliebigen Stelle des Scheinwerfergehäuses 10 ausgebildet sein, beispielsweise in einer Seitenwand oder der Rückwand, je nach dem wo die Steuereinrichtung 42 angeordnet ist. Die Steuereinrichtung 42, das heißt deren Bauelemente 52 bzw. die Leiterfolie 54, liegt auf der in das Scheinwerfergehäuse 10 weisenden Innenseite des Kühlkörpers 58 auf, so daß ein guter Wärmeübergang von der Steuereinrichtung 42 auf den Kühlkörper 58 sichergestellt ist. In der vorstehend beschriebenen Weise kann auch eine kombinierte Zünd- und Steuereinrichtung am Kühlkörper 58 angeordnet sein.

Der Kühlkörper 58 weist vorzugsweise an seiner Außenseite nach außen abstehende Kühlrippen 59 auf, um dessen Oberfläche zu vergrößern. Mit dem Kühlkörper 58 kann innerhalb des Scheinwerfergehäuses 10 ein Abschirmelement 60a,b, beispielsweise in Form einer Platte, verbunden sein, das zusammen mit dem Kühlkörper 58 die Steuereinrichtung 42 teilweise umgibt. Durch das Abschirmelement 60a,b wird von der Steuereinrichtung 42 abgegebene Wärme vom Reflektor 20 und der Gasentladungslampe 24 ferngehalten und an den Kühlkörper 58 abgeführt. Beim dargestellten Ausführungsbeispiel besteht das Abschirmelement aus zwei ebenen Metallplatten 60a,b, die 1-förmig angeordnet sind, wobei eine Platte 60a am in Lichtaustrittsrichtung 12 weisenden vorderen Rand des Kühlkörpers 58 etwa senkrecht zur Wandung 50 angeordnet ist und die andere Platte 60b mit Abstand oberhalb der Wandung 50 und etwa parallel zu dieser angeordnet ist.

Von der Wandung 50 des Scheinwerfergehäuses 10 steht nach außen die Öffnung 56 umgebend ein Kragen 62 ab und der Kühlkörper 58 weist einen über die Öffnung 56 hinausragenden Flansch 64 auf. Am Flansch 64 des Kühlkörpers 58 ist zum Scheinwerfergehäuse 10 hin eine umlaufende Nut 66 gebildet, in die ein elastisches Dichtelement 68 eingebracht ist. Bei am Scheinwerfergehäuse 10 montiertem Kühlkörper 58 liegt der Kragen 62 am Dichtelement 68 an und taucht unter elastischer Zusammendrückung desselben in dieses ein, so daß das Scheinwerfergehäuse 10 abgedichtet ist. Das Dichtelement 68 kann auch am Scheinwerfergehäuse 10 oder am Kühlkörper 58 angeschäumt sein oder am Scheinwerfergehäuse 10 einstückig mit angespritzt sein. Der Kühlkörper 58 kann beispielsweise mittels einer oder mehrerer Schrauben, mittels einer Rastverb3indung oder auf andere bekannte Weise am Scheinwerfergehäuse 10 befestigt werden.

Der Kühlkörper 58 und die Öffnung 56 können eine beliebige Form aufweisen, beispielsweise eine rechteckige Form wie beim Ausführungsbeispiel dargestellt, oder auch eine gerundete Form. Der Kühlkörper 58 weist eine ausreichend große Fläche auf, um die enststehende Wärme sicher abzuführen. Der Kühlkörper 58 kann sich über die gesamte Längserstreckung des Scheinwerfergehäuses 10 zwischen dessen vorderem Rand und dessen Rückseite erstrecken oder nur über einen Teil der Längserstreckung des Scheinwerfergehäuses. In seitlicher Richtung kann sich der Kühlkörper über die gesamte Breite des Scheinwerfergehäuses 10 erstrecken oder nur über einen Teil von dessen Breite.

## Patentansprüche

1. Scheinwerfer für Fahrzeuge mit einem Scheinwerfergehäuse (10), in dem eine Gasentladungslampe (24) angeordnet ist, und mit einer am Scheinwerfergehäuse (10) angeordneten elektrischen Versorgungseinrichtung (40,42) für die Gasentladungslampe (24), wobei das Scheinwerfergehäuse (10) im Bereich zumindest eines Teils (42) der Versorgungseinrichtung (40,42) eine Öffnung (56) aufweist, dadurch gekennzeichnet, daß die Öffnung (56) des Scheinwerfergehäuses (10) mit einem metallischen Kühlkörper (58) verschließbar ist und daß zummindest der Teil (42) der Versorgungseinrichtung (40,42) innerhalb des Scheinwerfergehäuses (10) am Kühlkörper (58) angeordnet ist.

2. Scheinwerfer nach Anspruch 1, dadurch gekennzeichnet, daß zumindest der Teil (42) der Versorgungseinrichtung (40,42) innerhalb des Scheinwerfergehäuses (10) zumindest teilweise durch ein metallisches Abschirmelement (60a,b) gegen weitere innerhalb des Scheinwerfergehäuses (10) angeordnete Bauteile (20,24) des Scheinwerfers abgeschirmt ist.

3. Scheinwerfer nach Anspruch 1 oder 2, dadurch gekennzeichnet, daß der Kühlkörper (58) außerhalb des Scheinwerfergehäuses (10) nach außen abstehende Kühlrippen (59) aufweist.

4. Scheinwerfer nach einem der Ansprüche 1 bis 3, dadurch gekennzeichnet, daß der Kühlkörper (58) auf der Außenseite des Scheinwerfergehäuses (10) einen über den Rand der Öffnung (56) hinausragenden Flansch (64) aufweist und daß zwischen der Außenseite des Scheinwerfergehäuses (10) und dem Flansch (64) ein Dichtelement (68) angeordnet ist.

5. Scheinwerfer nach einem der vorstehenden Ansprüche, dadurch gekennzeichnet, daß die Versorgungseinrichtung eine Zündeinrichtung (40) und eine Steuereinrichtung (42) aufweist und daß die Steuereinrichtung (42) der am Kühlkörper (58) angeordnete Teil der Versorgungseinrichtung ist.
